# EUROPEAN PATENT SPECIFICATION

(11) **EP 2 887 194 B1**
(45) Date of publication and mention of the grant of the patent: **01.11.2017**
(21) Application number: 14198986.3
(22) Date of filing: 18.12.2014
(51) Int. Cl.: G06F 3/0482, G06F 3/0481

(54) **Method for controlling a composition of a screen and electronic device thereof**
Verfahren zur Steuerung einer Zusammensetzung eines Bildschirms und elektronische Vorrichtung dafür
Procédé de commande d'une composition d'un écran et son dispositif électronique

(30) Priority: 18.12.2013 KR 20130158051
(43) Date of publication of application: 24.06.2015
(73) Proprietor: Samsung Electronics Co., Ltd., Gyeonggi-do 443-742 (KR)
(72) Inventor: SON, Ju-Hee, Seoul (KR); PARK, Sung-Deuk, Gyeonggi-do (KR); JIN, Yeon-Ho, Seoul (KR); KIM, Hui-Ok, Gyeonggi-do (KR); SONG, Melody, Seoul (KR)
(74) Representative: HGF Limited

(56) References cited:
- EP-A1- 2 451 141
- WO-A1-2013/102267
- US-A1- 2007 082 707
- US-A1- 2010 017 505
- US-A1- 2011 202 821
- US-A1- 2012 042 036
- US-A1- 2012 072 871
- US-A1- 2013 198 506
- US-A1- 2013 311 946

## Description

### TECHNICAL FIELD

The present invention relates generally to screen composition control in an electronic device. More particularly, the present invention relates to a method and an apparatus for providing a plurality of home screen layouts and their setting in an electronic device including a touch screen.

### BACKGROUND

In recent years, rapid growth of communication technologies enables portable terminals such as smart phones to provide various functions. That is, fast progress of wireless communication and data processing technologies allows users to utilize not only voice call but also Internet access, video call, and video message transmission using the portable terminal.

Services provided by the portable terminal or applications processed in the portable terminal are increasing and diversifying.

When an application is downloaded to the portable terminal, the downloaded application is stored and displayed in a menu screen in the order it is downloaded. The user of the portable terminal can select the application frequently used from application icons and widgets displayed in the menu screen, and move and display it in the home screen of the portable terminal. If necessary, the user may move the application icon and widget installed in the home screen to particular coordinates or region.

In general, to arrange the application icon and widget in the home screen, the portable terminal can select, download, and install the application by searching an application store/market, and then drag the application icon or widget to the particular coordinates or region of the home screen.

Such a conventional method for setting and changing the home screen arrangement includes only a single home screen. Accordingly, when a type or a preferred position of the application frequently used differs in some cases, the user needs to directly change the position in the home screen by selecting the application icon or widget frequently used. When the situation changes, the user needs to rearrange the position in the home screen by reselecting the application icon or widget frequently used. In addition, the user needs to install a general application recommended in a particular case, by accessing and searching the application store/market.

Meanwhile, while the users install a number of applications to the terminal, they arrange the applications at particular positions preferred in the home screen according to the frequency of application use. However, the frequency of the application use is not fixed but mostly variable depending on the situation. A conventional electronic device provides merely the fixed home screen setting. To change the home screen layout and the system setting in some cases, the user needs to rearrange/reconfigure them one by one. It is difficult for the user to recognize the general application in a particular situation (when the user migrates to other country or multiple users such as parents/children share the same terminal). US 2013/198506 discloses a method for making intelligent application and setting recommendations may include determining, by a device, a current context of a user of the device in response to the device being one of unlocked and turned-on. The method may also include determining, by the device, if the current context of the user has changed from a previous context of the user at a time when the device was one of locked and turned-off. The method may additionally include presenting a recommendation on a display of the device. The recommendation may include at least one of an application for operation on the device, options for operation of the device, and operating settings of the device, based on the current context of the user, in response to determining that the current context of the user has changed from the previous context.
US 2007/082707 discloses systems and methods for providing an improved user interface for mobile devices. Data and services available through the mobile device can be represented as a set of tiles maintained in a display space. The tiles provide a snapshot of the current state of content available through the mobile device without requiring any interaction by the user. The tiles and display space are customizable and can be dynamically updated to display content to a user. In addition, tiles can provide functionality, including simple tasks to a user without requiring the user to navigate away from the tile display space. Tiles can also provide quick access to start software applications. Tiles can be organized in the display space by the user or the tiles can be automatically grouped based upon associated metadata.

US 2011/202821 discloses a bidded marketplace for applications, and in particular, methods and a system for presenting application modules on a graphical display page.

US 2012/072871 discloses a terminal device for downloading and installing an application, comprising inputting a command to download the application, selecting a page to add an identifier for executing the application, and displaying the identifier on the selected page. US 2013/198506 discloses a method for recommending applications in a home screen of a portable device when the user changes context. The document also discloses context aware user profiles. A user profile includes user settings and icon layout. The context awareness is provided by different sensors: cameras, GPS, accelerometers and microphone to detect sounds. US 2007/082707 discloses a method for managing icon layouts (tile spaces) in a home screen of a portable device. Different tile sizes and positioning configurations are described. The tile spaces can be associated with a profile tag. The profile can be changed by the user but it is also context-aware and might automatically change depending on position or time of the day. US2013/311946 describes an automated method for application update. A recommended application based on a change in the user's life patterns may replace a former application. EP 2451141 discloses methods and apparatus to display mobile device contents.

WO 2013/102267 discloses a method and system for dynamically assignable user interfaces.

US 2012/042036 describes a context-aware application recommendation system. A server receives context data from a portable device and selects interesting applications for the user which are then notified/installed. The applications might be automatically displayed in the home screen in a transparent way. US 2010/017505 discloses an application updating management terminal device, system and program, comprising a use frequency communication unit.

### SUMMARY

To address the above-discussed deficiencies of the prior art, it is an aim of the present invention to provide a method and an apparatus for controlling a composition of a home screen layout as defined by the independent claims 1 and 6 of the present application. Different preferred embodiments of the invention are defined by the other appended claims.

Other aspects, advantages, and salient features of the invention will become apparent to those skilled in the art from the following detailed description, which, taken in conjunction with the annexed drawings, discloses exemplary embodiments of the invention.

It will be appreciated from the following description that, in certain exemplary embodiments of the invention, features concerning the graphic design of the user interfaces are combined with interaction steps or means to achieve a technical effect. Furthermore, it will also be appreciated that, in certain exemplary embodiments of the invention, graphic features concerning the technical information (e.g. internal machine states) are utilized to achieve a technical effect. For example, certain embodiments aim to achieve the technical effect of lowering a burden (e.g. a cognitive, operative, operational, operating or manipulative burden) of a user when performing certain computer of device interaction. Other certain embodiments aim to achieve the technical effect of providing a more efficient man-machine (user-machine) interface.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1A is a block diagram of an electronic device according to an exemplary embodiment of the present invention;
FIG. 1B is a block diagram of a server for supporting screen composition control of the electronic device according to an exemplary embodiment of the present invention;
FIG. 2 is a detailed block diagram of a processor of the electronic device according to an exemplary embodiment of the present invention;
FIG. 3 is a flowchart of a method for processing an event for generating or changing the screen composition in the electronic device according to an exemplary embodiment of the present invention;
FIGS. 4A through 4F are user interfaces for processing the screen composition change event in the electronic device according to an exemplary embodiment of the present invention;
FIG. 5 is a flowchart of a method for changing the screen composition in the electronic device according to an exemplary embodiment of the present invention;
FIG. 6 is a flowchart of a method for changing the screen composition in the electronic device according to an exemplary embodiment of the present invention;
FIGS. 7A through 7F are user interfaces for changing the screen composition in the electronic device according to an exemplary embodiment of the present invention;
FIG. 8 is a flowchart of a method for changing the screen composition when the electronic device moves according to an exemplary embodiment of the present invention;
FIG. 9 is a flowchart of a method for controlling the screen composition change in the server when the electronic device roams according to an exemplary embodiment of the present invention;
FIGS. 10A and 10B are user interfaces for changing the screen composition during the roaming according to an exemplary embodiment of the present invention;
FIGS. 11A and 11B are user interfaces for changing the screen composition during the roaming according to an exemplary embodiment of the present invention;
FIG. 12 is a flowchart of a method for controlling the screen composition according to an exemplary embodiment of the present invention;
FIG. 13 is a flowchart of a method for changing the screen composition in the electronic device according to an exemplary embodiment of the present invention;
FIGS. 14A and 14B are user interfaces for adding a new home screen according to an exemplary embodiment of the present invention; and
FIGS. 15A, 15B, and 15C are home screens corresponding to countries according to an exemplary embodiment of the present invention.

Throughout the drawings, like reference numerals will be understood to refer to like parts, components and structures.

### DETAILED DESCRIPTION OF THE INVENTION

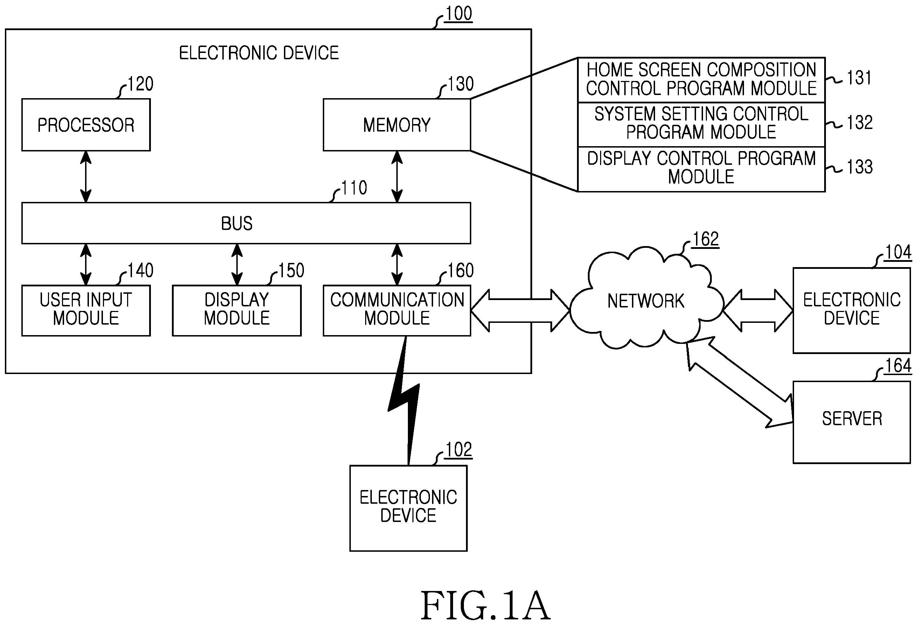

FIGURES 1A through 15C, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged electronic devices. Exemplary embodiments of the present invention will be described herein below with reference to the accompanying drawings. Although specific embodiments of the present invention are illustrated in the drawings and relevant detailed descriptions are provided, various changes can be made to the exemplary embodiments and various exemplary embodiments may be provided. Accordingly, the various exemplary embodiments of the present invention are not limited to the specific embodiments and should be construed as including all changes and/or equivalents or substitutes included in the ideas and technological scopes of the exemplary embodiments of the present invention. In the explanation of the drawings, similar reference numerals are used for similar elements.

The term "include" or "may include" used in the exemplary embodiments of the present invention indicates the presence of disclosed corresponding functions, operations, elements, etc., and does not limit additional one or more functions, operations, elements, etc. In addition, it should be understood that the term "include" or "has" used in the exemplary embodiments of the present invention is to indicate the presence of features, numbers, steps, operations, elements, parts, or a combination thereof described in the specifications, and does not preclude the presence or addition of one or more other features, numbers, steps, operations, elements, parts, or a combination thereof.

The term "or" or "at least one of A or/and B" used in the various exemplary embodiments of the present invention includes any and all combinations of the associated listed items. For example, the term "A or B" or "at least one of A or/and B" may include A, B, or all of A and B.

Although the terms such as "first" and "second" used in the various exemplary embodiments of the present invention may modify various elements of the various exemplary embodiments, these terms do not limit the corresponding elements. For example, these terms do not limit an order and/or importance of the corresponding elements. These terms may be used for the purpose of distinguishing one element from another element. For example, a first user device and a second user device all indicate user devices or may indicate different user devices. For example, a first element may be named as a second element without departing from the right scope of the various exemplary embodiments of the present invention, and similarly, a second element may be named as a first element.

It will be understood that when an element is "connected" or "coupled" to another element, the element may be directly connected or coupled to the another element, and there may be another new element between the element and the another element. To the contrary, it will be understood that when an element is "directly connected" or "directly coupled" to another element, there is no other element between the element and the another element.

The terms used in the various exemplary embodiments of the present invention are for the purpose of describing particular exemplary embodiments only and are not intended to be limiting. As used herein, the singular forms are intended to include the plural forms as well, unless the context clearly indicates otherwise.

All of the terms used herein including technical or scientific terms have the same meanings as those generally understood by an ordinary skilled person in the related art unless they are defined otherwise. The terms defined in a generally used dictionary should be interpreted as having the same meanings as the contextual meanings of the relevant technology and should not be interpreted as having ideal or exaggerated meanings unless they are clearly defined in the various exemplary embodiments.

An electronic device according to various exemplary embodiments of the present invention may be a device which is equipped with a communication function. For example, the electronic device may include at least one of a smartphone, a tablet PC, a mobile phone, a video phone, an electronic book reader, a desktop PC, a laptop PC, a net book computer, a Personal Digital Assistant (PDA), a Portable Multimedia Player (PMP), an MP3 player, a mobile medical machine, a camera, and a wearable device (for example, a Head-Mounted-Device (HMD) such as electronic glasses, electronic clothing, an electronic bracelet, an electronic necklace, an electronic accessory, an electronic tattoo, or a smart watch).

According to an exemplary embodiment, the electronic device may be a smart home appliance which is equipped with a communication function. For example, the smart home appliance may include at least one of a television, a Digital Versatile Disk (DVD) player, a stereo, a refrigerator, an air conditioner, a cleaner, an oven, a microwave oven, a washing machine, an air cleaner, a set-top box, a TV box (for example, Samsung HomeSync™, Apple TV™, or Goggle TV™), a game console, an electronic dictionary, an electronic key, a camcorder, and an electronic album.

According to an exemplary embodiment, the electronic device may include at least one of various medical machines (for example, Magnetic Resonance Angiography (MRA), Magnetic Resonance Imaging (MRI), Computerized Tomography (CT), a tomograph, an ultrasound machine, etc.), a navigation device, a Global Positioning System (GPS) receiver, an Event Data Recorder (EDR), a Flight Data Recorder (FDR), an automotive infotainment device, an electronic equipment for ship (for example, a navigation equipment for ship, a gyro compass, etc.), an airline electronic device, a security device, a head unit for a car, an industrial or home service robot, an Automated Teller Machine (ATM) of a financial institution, and a Point-Of-Sales (POS) of a store, which are equipped with a communication function.

According to an exemplary embodiment, the electronic device may include at least one of a part of furniture or a building/a structure equipped with a communication function, an electronic board, an electronic signature input device, a projector, and various measurement devices (for example, water, power, gas, radio waves, etc.). The electronic device according to various exemplary embodiment of the present invention may be one or a combination of one or more of the above-mentioned devices. In addition, the electronic device according to various exemplary embodiments of the present invention may be a flexible device. In addition, it is obvious to an ordinary skilled person in the related art that the electronic device according to various exemplary embodiments of the present invention is not limited to the above-mentioned devices.

Hereinafter, the home screen indicates a screen displayed when a home key is selected, and includes icons or widgets of applications frequently used by the user.

FIG. 1A is a block diagram of an electronic device according to an exemplary embodiment of the present invention. Referring to FIG. 1A, the electronic device 100 can include a bus 110, a processor 120, a memory 130, a user input module 140, a display module 150, and a communication module 160.

The bus 110 can be a circuit for interlinking the components and transferring communication (e.g., control messages) between the components.

The processor 120 can receive an instruction from the components (e.g., the memory 130, the user input module 140, the display module 150, and the communication module 160) of the electronic device 100 via the bus 110, interpret the received instruction, and perform an operation or a data processing according to the interpreted instruction.

The processor 120 can control the screen composition of the electronic device 100 by executing a screen composition control program module 131, a system setting control program module 132, or a display control program module 133 of the memory 130.

The memory 130 can store the instruction or the data received from or generated by the processor 120 or the other components (e.g., the user input module 140, the display module 150, and the communication module 160). For example, the memory 130 can include the screen composition control program module 131, the system setting control program module 132, and the display control program module 133. Although it is not depicted, the memory 130 can further include one or more of a kernel, middleware, and an Application Programming Interface (API). The programming modules can be implemented using software, firmware, and hardware, or a combination of at least two of them.

The screen composition control program module 131 can include instruction sets for controlling to generate and change the home screen layout, the system setting control program module 132 can include instruction sets for controlling to change the system setting (e.g., language, sound volume, display brightness, and communication mode activation), and the display control program module 133 can include instruction sets for outputting a control screen for the home screen layout generation and change or the system setting, to the display module 150.

The kernel can control or manage system resources (e.g., the bus 110, the processor 120, or the memory 130) used to execute the operation or the function of the other programming modules, for example, the middleware, the API, or the program module 131, 132, and 133. The kernel can provide an interface allowing the API or the program module 131, 132, and 133 to access and control or manage the individual component of the electronic device 100.

The middleware can relay data in communication between the API or the program module 131, 132, and 133 and the kernel. The middleware can perform load balancing for work requests received from the program modules 131, 132, and 133 by giving priority of the system resource (e.g., the bus 110, the processor 120, or the memory 130) of the electronic device 100 to at least one application of the program modules 131, 132, and 133.

The API, which is an interface for the program modules 131, 132, and 133 to control the kernel or the middleware, can include at least one interface or function for, for example, file control, window control, image processing, or text control.

The memory 130 can store home screen and system setting combination information per tag.

The user input module 140 can receive and forward the instruction or the data from the user to the processor 120 or the memory 130 via the bus 110. The display module 150 can display an image, a video, or data to the user.

The communication module 160 can connect the communication between other electronic device 102 or a server 164 and the electronic device 100. The communication module 160 can support short-range communication protocol (e.g., Wireless Fidelity (WiFi), Bluetooth (BT), Near Field Communication (NFC)), or network communication (e.g., Internet, Local Area Network (LAN), Wire Area Network (WAN), telecommunication network, cellular network, satellite network, or Plain Old Telephone Service (POTS)). The electronic devices 102 and 104 can be the same as or different from the electronic device 100 in type.

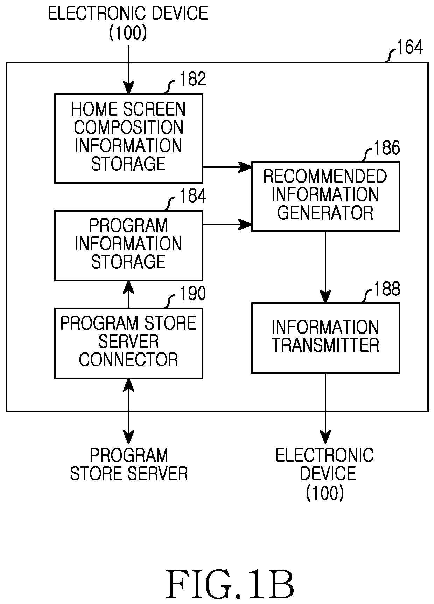

The server 164 can store the home screen arrangement information and the system setting information of the electronic device 100 and provide, if necessary, the recommended information (e.g., a recommended application name, an installation link, and position information of the recommended application) to the electronic device 100. A detailed block diagram of the server 164 shall be explained by referring to FIG. 1B.

FIG. 1B is a block diagram of the server for supporting the screen composition control of the electronic device according to an exemplary embodiment of the present invention.

Referring to FIG. 1B, the server 164 can include a screen composition information storage 182, a program information storage 184, a recommended information generator 186, an information transmitter 188, and a program store server connector 190.

The screen composition information storage 182 can store the tag transmitted by the electronic device 100, the system setting, and the home screen layout arrangement information in a matrix structure per electronic device and per tag. For example, the tag can include a label representing the home screen layout and the system setting information corresponding to a particular time or a particular place, so as to identify the plurality of the home screens. For example, the tag can include a country name, (e.g., the US, Korea, Japan, and China), a regional name (e.g., Seoul, Gwangju, Jeju, and Busan), or a place name (e.g., home, company, public place (airport, but terminal, etc.).

Tag information can be determined by a user input.

When a plurality of users share a single electronic device, the tag can be determined per user identifier. For example, when a father, a mother, a sister, and a brother share the single electronic device, each user can use their own system setting or home screen.

The program store server connector 190 can provide an interface for connecting an external system which provide applications, such as Google Play or Samsung Apps, and retrieve and receive application information from the external system. The external system such as Google Play or Samsung Apps can manage the applications based on a category and provide the download service to the electronic device.

The program information storage 184 can normalize and store basic information of the applications received through the program store server connector 190.

The recommended information generator 186 can generate the recommended information per tag of the electronic device by vertically and horizontally mapping and analyzing the information stored in the screen composition information storage 182 and the program information storage 184.

For example, for the corresponding electronic device, the recommended information generator 186 can provide the corresponding electronic device with the information for composing the home screen layout corresponding to the US (e.g., the recommended application name, the installation link, and the application position information in the home screen) based on the home screen layout information corresponding to Korea.

The information transmitter 188 can pull or push the recommended information fed from the recommended information generator 186, to the corresponding electronic device.

The push technology periodically transmits the recommended information without a user's request, and the pull technology transmits the recommended information according to the user's request.

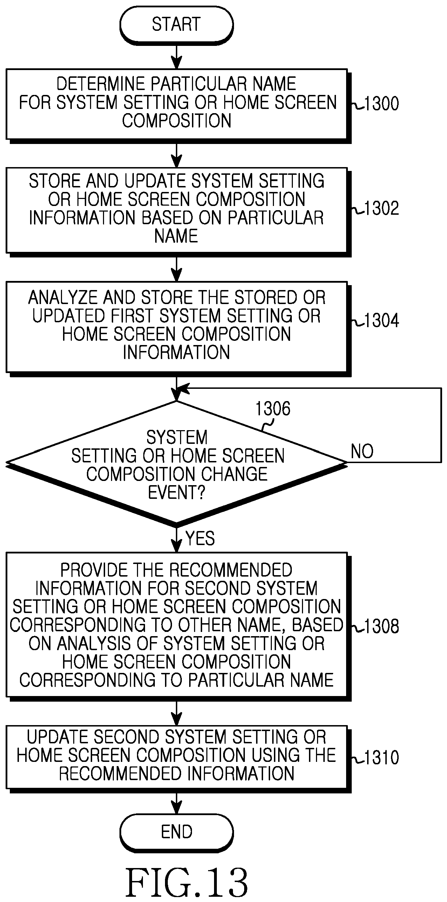

The server of FIG. 1B may be implemented inside the electronic device. For example, the electronic device can analyze first system setting and home screen layout arrangement information corresponding to a particular name, and provide the user with the recommended information for second system setting and home screen layout arrangement information corresponding to a place to which the terminal moves as shown in FIG. 13.

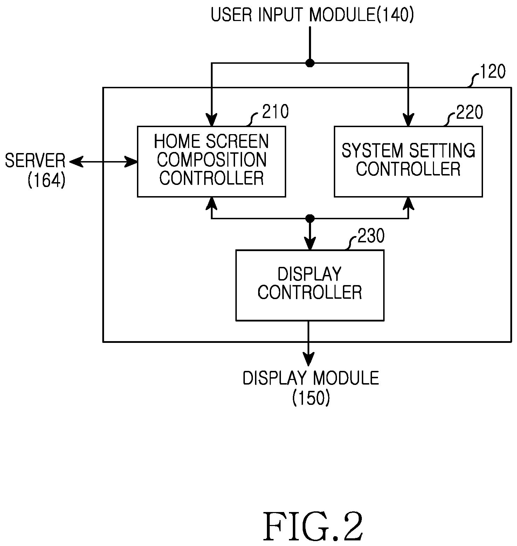

FIG. 2 is a detailed block diagram of the processor of the electronic device according to an exemplary embodiment of the present invention.

Referring to FIG. 2, the processor 120 of the electronic device 100 can include a screen layout controller 210, a system setting controller 220, and a display controller 230.

The screen layout controller 210 can control to configure a wallpaper, a lock screen, and the home screen based on the user input fed from the user input module 140. For example, the screen layout controller 210 can control to change an image of the wallpaper and the lock screen, or to create/delete/move the application icon or widget in the screen.

The system setting controller 220 can control the system settings such as display brightness, volume, and communication mode activation of the electronic device 100, based on the user input fed from the user input module 140.

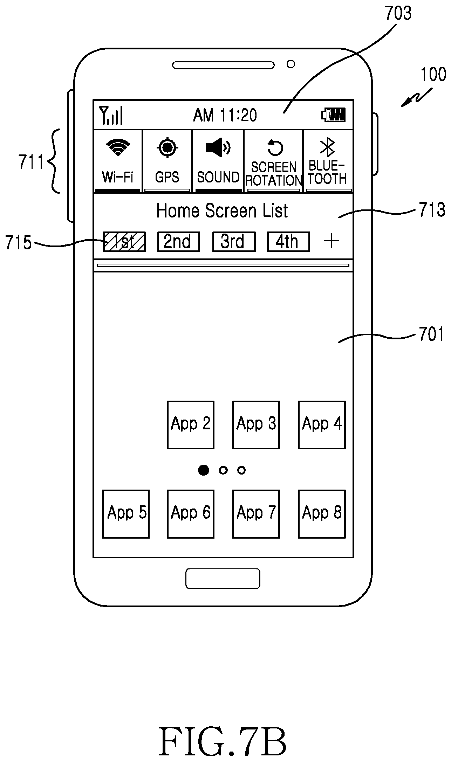

The display controller 230 can control the display to display a system setting control screen in a first upper area 711 of the screen of FIG 7B so as to directly access the system settings such as display brightness, volume, and communication mode activation/deactivation, with menu selection, to add a name for storing the home screen and system setting combination per tag, to display a control screen in a second upper area 713 of the screen of FIG. 7B so as to select the stored name, and to display details of notification of the electronic device in a third upper area of the screen.

The screen displayed in the first, second, and third upper areas can be scrolled down in any screen condition and displayed uppermost of representation layers.

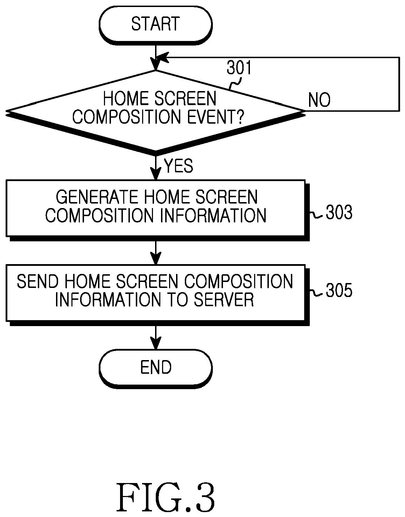

FIG. 3 is a flowchart of a method for processing an event for generating or changing the screen composition in the electronic device according to an exemplary embodiment of the present invention.

Referring to FIG. 3, when the screen composition event occurs in step 301, the electronic device 100 can generate and store in the memory 130 the screen composition information corresponding to the screen composition event in step 303. For example, the screen composition event can move, delete, or create the application icon (or widget) in the home screen, and the screen composition information can include the home screen layout information. The home screen layout information can indicate the home screen layout information changed when the application icon or widget is created/deleted/moved in the home screen. Herein, the screen composition information may represent information regarding the screen layout.

The screen composition event can be a system setting event such as display brightness control, volume control, and bell sound control. In so doing, the screen composition information can be the system setting information such as display brightness control, volume control, bell sound control, or language and keyboard setting.

The screen composition event can change the wallpaper or lock screen image. At this time, the screen composition information can be the changed wallpaper or lock screen image information.

In step 305, the electronic device 100 can transmit the changed screen composition information to the server 164.

The changed screen composition information can be transmitted to the server per change event or on a periodic basis.

The changed screen composition information can be transmitted to the server according to the user menu selection.

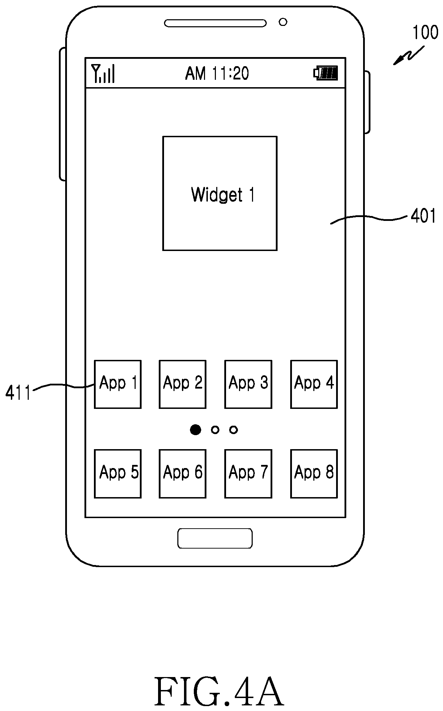

FIGS. 4A through 4F depict user interfaces for processing the screen composition change event in the electronic device according to an exemplary embodiment of the present invention.

In FIG. 4A, a home screen 401 includes icons and a widget of various applications frequently used by the user. For example, the home screen 401 includes one widget and 8 application icons. The home screen 401 can include more widgets and application icons, or less widgets and application icons.

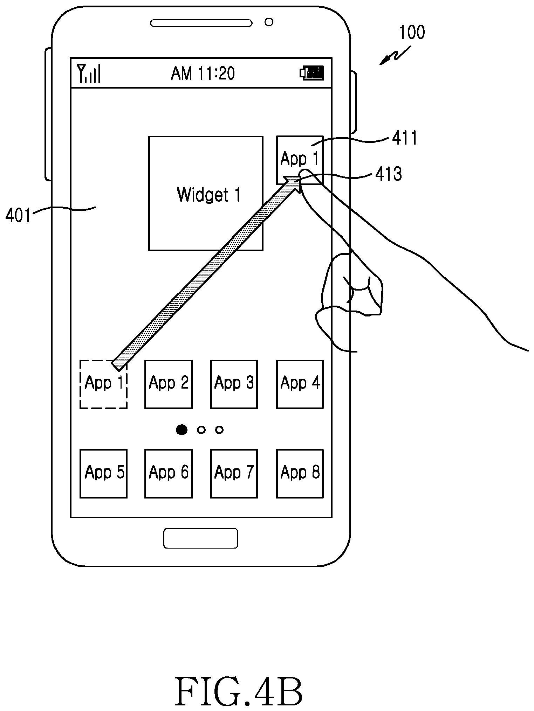

In FIG. 4B, the application icon App1 411 is moved to other area in the home screen 401 according to a user gesture (e.g., touch and drag) 413.

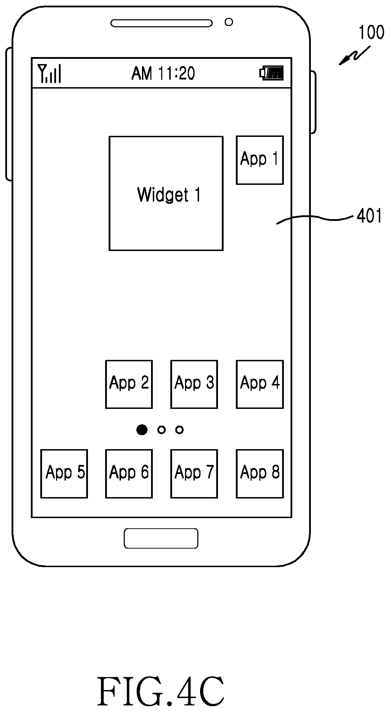

In FIG. 4C, the application icon App1 411 is placed in the other area in the home screen 401.

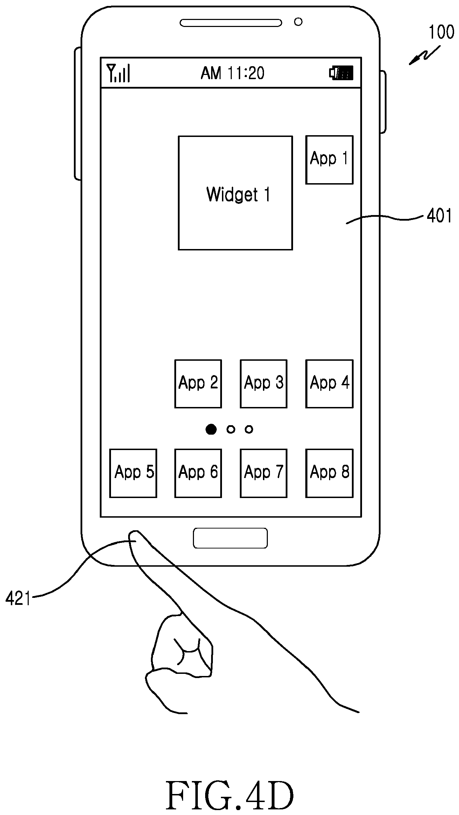

In FIG. 4D, a menu key 421 can be selected to send the home screen layout information relating to the moved application icon App1 411, to the server 164.

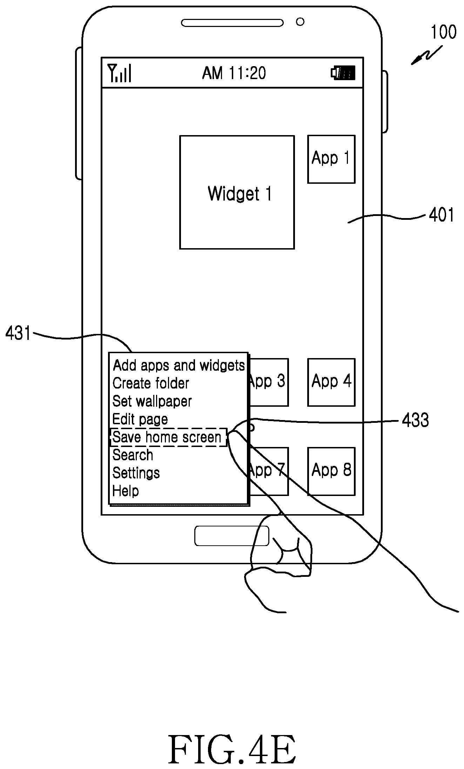

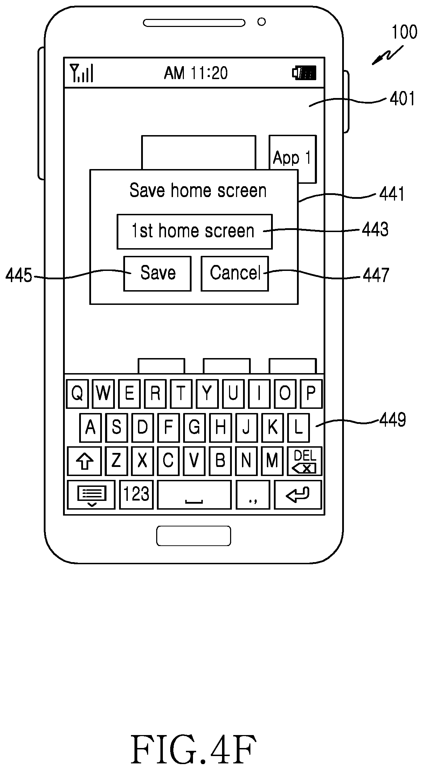

When the menu key 421 is selected in FIG 4D, a menu list 431 is displayed as shown in FIG. 4E. When "Save home screen" 433 is selected in the menu list 431, the electronic device can display a window 441 for entering a name for storing the changed home screen layout as shown in FIG. 4F. In addition, a virtual keyboard 449 can be displayed to enter characters, numerals, or symbols.

The name for storing the changed home screen layout can display a default tag name 443 corresponding to the initial home screen layout, or the blank. When the user enters the tag name 443 corresponding to the current home screen layout and then selects "Save" 445, the home screen layout information changed to the determined tag name can be stored in the memory 130 of the electronic device 100. The changed home screen layout information can be transmitted to the server 164. By contrast, when "Cancel" 447 is selected, the process for storing the home screen layout information changed to the determined tag name can be cancelled.

As such, when the home screen layout is changed and then the user input is received as shown in FIGS. 4D, 4E, and 4F, the home screen layout information changed to the determined tag name can be stored and provided to the server 164.

After the home screen layout is changed, without the user input of FIGS. 4D, 4E, and 4F, the changed home screen layout information may be automatically stored and provided to the server 164. In so doing, the changed home screen layout information can be updated with the current tag name.

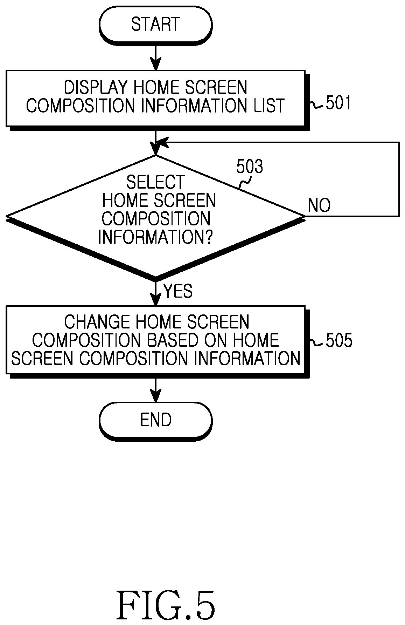

FIG. 5 is a flowchart of a method for changing the screen composition in the electronic device according to an exemplary embodiment of the present invention.

Referring to FIG. 5, the electronic device 100 can display a screen composition information list in step 501. The screen composition information list can contain the multiple home screen layouts or the system setting information. For example, the first upper area 711 of FIG. 7B in the screen can display a system setting object, and the second upper area 713 of FIG. 7B in the screen can display a home screen layout list.

When screen composition information is selected in the screen composition information list in step 503, the electronic device 100 can change the screen composition based on the selected screen composition information in step 505. For example, when home screen layout information is selected from the home screen layout information list, the electronic device 100 can set the home screen layout based on the selected home screen layout information.

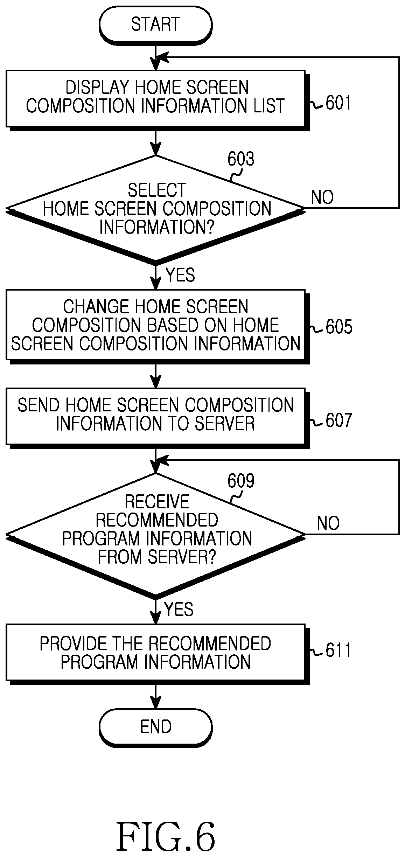

FIG. 6 is a flowchart of a method for changing the screen composition in the electronic device according to an exemplary embodiment of the present invention.

Referring to FIG. 6, the electronic device 100 can display the screen composition information list in step 601. The screen composition information list can include the plurality of the home screen layouts or the system setting information. For example, the first upper area 711 of FIG. 7B in the screen can display the system setting object, and the second upper area 713 of FIG. 7B in the screen can display the home screen layout list.

When screen composition information is selected from the screen composition information list in step 603, the electronic device 100 can change the screen composition based on the selected screen composition information in step 605. For example, when home screen layout information is selected from the home screen layout information list, the electronic device 100 can set the home screen layout based on the selected home screen layout information.

In step 607, the electronic device 100 can transmit the selected screen composition information to the server 164.

When receiving the recommended program information from the server 164 in step 609, the electronic device 100 can provide the recommended program information to the user in step 611. For example, the server 164 can analyze the selected screen composition information received from the electronic device 100, and provide the electronic device 100 with the link information and the arrangement position, as the recommended program information, of the application to be arranged in the second home screen layout which is used when the electronic device 100 moves or the user is changed, based on the type and the position of the application icon in the first home screen layout.

The user can select and install the corresponding recommended program based on the recommended program information.

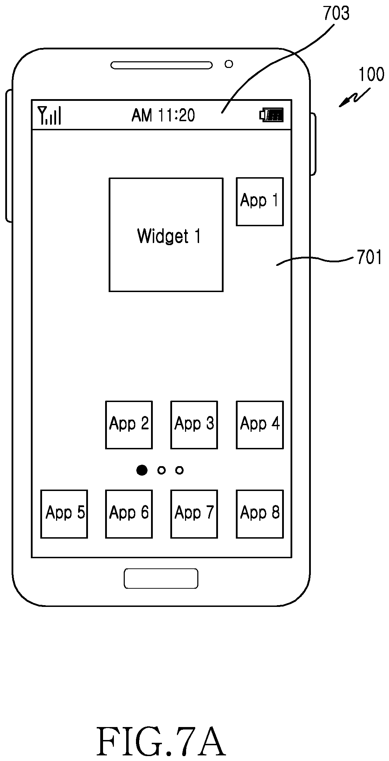

FIGS. 7A through 7F depict user interfaces for changing the screen composition in the electronic device according to an exemplary embodiment of the present invention.

In FIG. 7A, a particular one 701 of the home screens of the electronic device 100 is displayed. The uppermost area of the screen can display a status display area 703. The status display area 703 can display the received signal strength of an antenna, the local time, and the remaining battery capacity.

In FIG. 7B, a notice bar of system settings 711 and home screen settings 713 is activated. In the system settings 711, the user can activate or deactivate WiFi, GPS, Bluetooth communication, and auto rotation, and select sound/vibration/mute. In the home screen settings 713, the user can select his/her intended home screen. A first home screen 715 is activated, and at least four home screens exist.

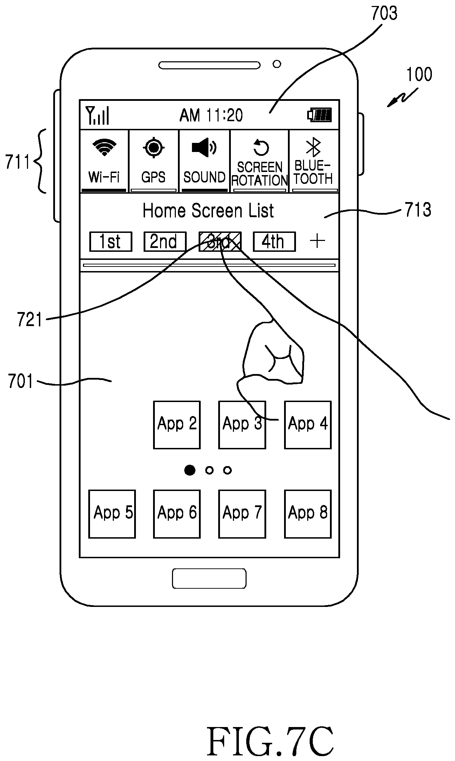

In FIG. 7C, a third home screen 721 is selected in the home screen settings 713.

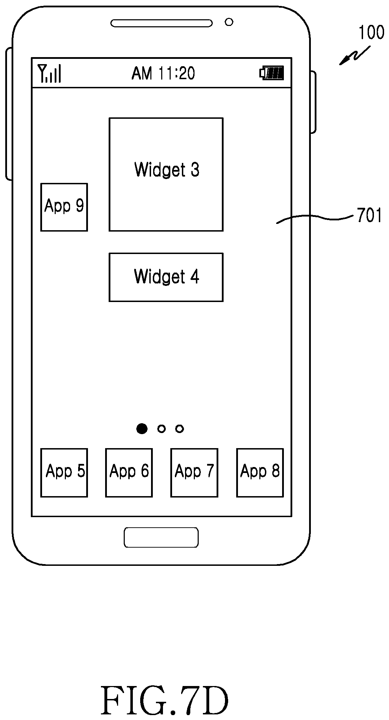

FIG. 7D depicts the home screen 701 according to the layout of the third home screen 721 when the third home screen 721 is selected in FIG. 7C. For example, the layout of the third home screen can include 2 widgets (e.g.,Widget3 and Widget4) and 5 application icons (e.g, App5, App6, App7, App8, and App9).

Information of the third home screen 721 selected in FIG. 7C can be provided to the server 164. When the server 164 recognizes that the home screen of the electronic device 100 is switched from the first home screen to the third home screen, it can provide the electronic device 100 with the recommended information (e.g., the recommended application name, the installation link, and the icon position of the recommended application in the home screen) based on the layout information of other home screen (e.g., the first home screen).

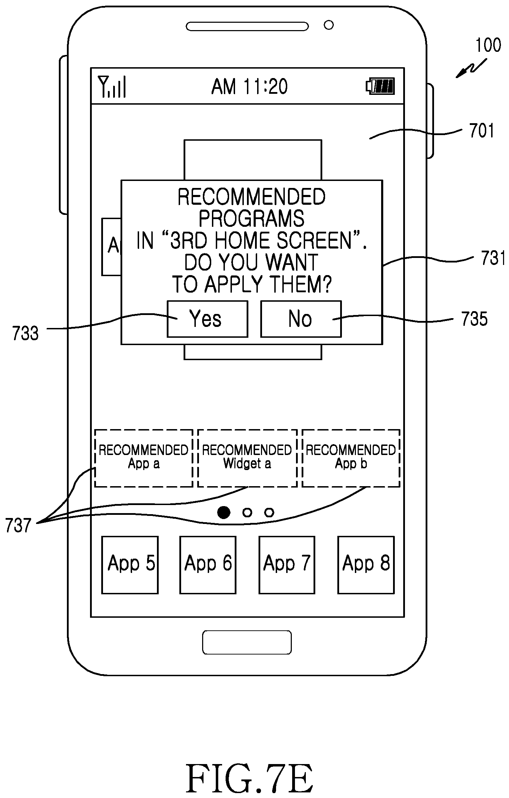

FIG. 7E depicts the screen when the recommended information is received from the server 164 after the home screen of the electronic device 100 is switched from the first home screen to the third home screen.

For example, a message window 731 can notify three recommended programs, and icons of the three recommended programs can be displayed at positions 737 in the home screen 701. When "Yes" 733 is selected in the message window 731, the three recommended programs can be installed and the icons of the three recommended programs can be arranged at the positions 737 in the home screen 701. By contrast, when "No" 735 is selected in the message window 731, the three recommended programs are not installed.

The positions 737 of the three recommended program icons in the home screen 701 can be determined by considering the application position in the first home screen of the similar category. For example, when the first home screen includes a map application in Korean and the third home screen includes a map application in English, the electronic device can recommend the position of the English map application as the position of the Korean map application.

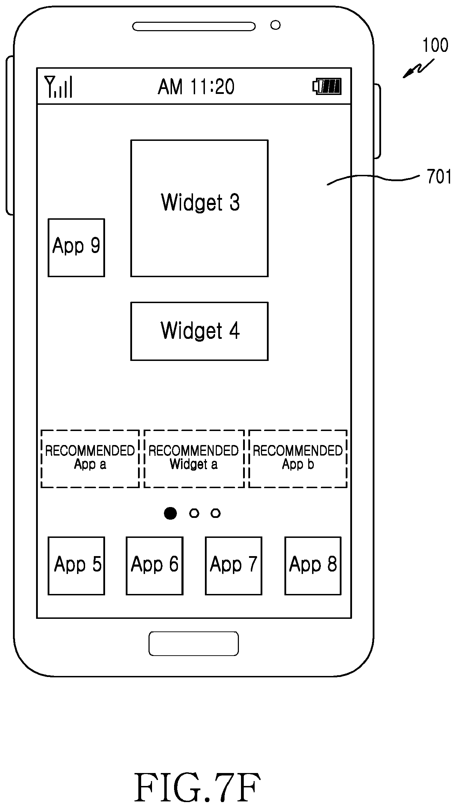

FIG. 7F depicts the third home screen when "Yes" 733 is selected in FIG 7E. Although it is not depicted, when "No" 733 is selected in FIG. 7E, the cancelled recommended applications (the recommended App a, the recommended widget a, and the recommended App b) may not be displayed even after the third home screen is reselected. Regardless of whether the recommended application is cancelled, the recommended applications (the recommended App a, the recommended widget a, and the recommended App b) can be displayed every time the third home screen is reselected.

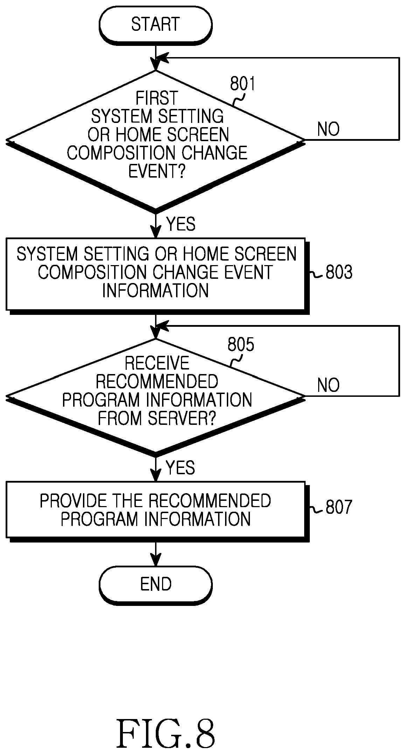

FIG. 8 is a flowchart of a method for changing the screen composition when the electronic device moves according to an exemplary embodiment of the present invention.

Referring to FIG. 8, when an event for changing the first system setting or the screen composition occurs, that is, when the electronic device 100 roams in the other country or the user is changed (e.g., from the first user to the second user) in step 801, the electronic device 100 can transmit the system setting or screen composition change event information to the server 164 in step 803.

When receiving the recommended program information corresponding to the system setting or screen composition change event information from the server 164 in step 805, the electronic device 100 can provide the recommended program information to the user in step 807.

For example, when a communication network country accessed by the electronic device 100 is changed from 'Korea' to 'Germany' the electronic device 100 can transmit the corresponding change to the server 164. The server 164 can analyze the installed application information of the electronic device 100 in Korea and transmit the recommended application list mapped to the country information 'Germany' to the electronic device 100.

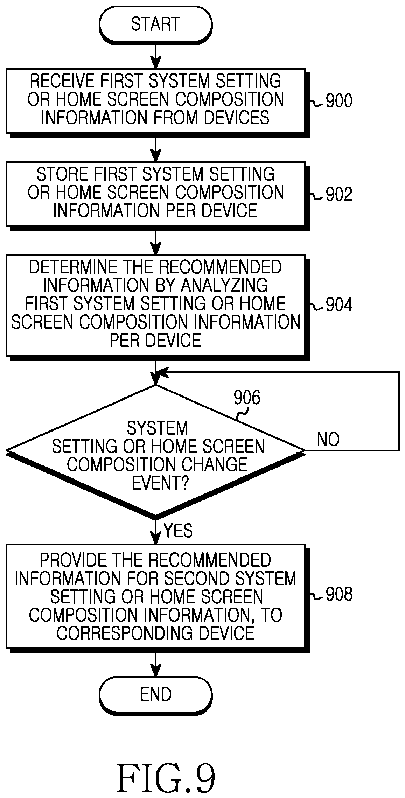

FIG. 9 is a flowchart of a method for controlling the screen composition change of the electronic device in the server according to an exemplary embodiment of the present invention.

Referring to FIG. 9, the server 164 can receive the first system setting or screen composition information from at least one electronic device in step 900, and store the first system setting or screen composition information received per electronic device in step 902. The first system setting or screen composition information is the current system setting or screen composition information of the electronic device which is transmitted from each electronic device to the server 164.

In step 904, the server 164 can determine the recommended information for each electronic device by analyzing the first system setting or screen composition information per electronic device. When the event for changing the system setting or the screen composition occurs in step 906, the server 164 can provide the recommended information for the second system setting or screen composition information to the corresponding electronic device in step 908. The second system setting or screen composition information is the system setting or screen composition information used by the electronic device in other place or in other country. Step 906 can precede step 904.

For example, when the corresponding electronic device uses the first system setting or screen composition information in Korea, the server 164 classifies the applications in the home screen used in Korea based on the category. When the corresponding electronic roams in Germany, the server 164 can receive the application information from an application server which services in Germany, compares the applications used in Korea with the applications used in Germany, and recommend at least one application for Germany, similar to or relating to the applications in the home screen used in Korea, to the corresponding electronic device.

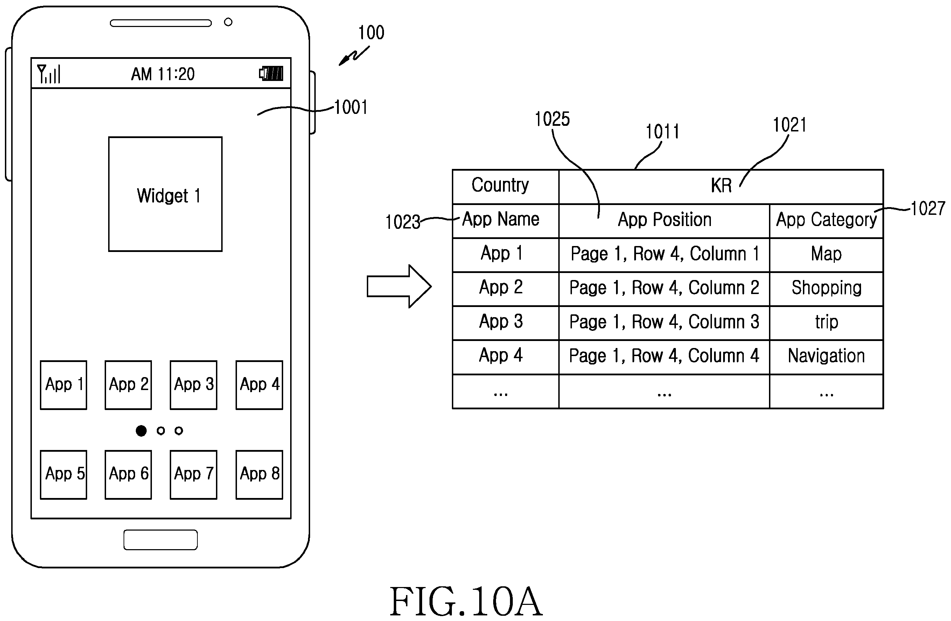

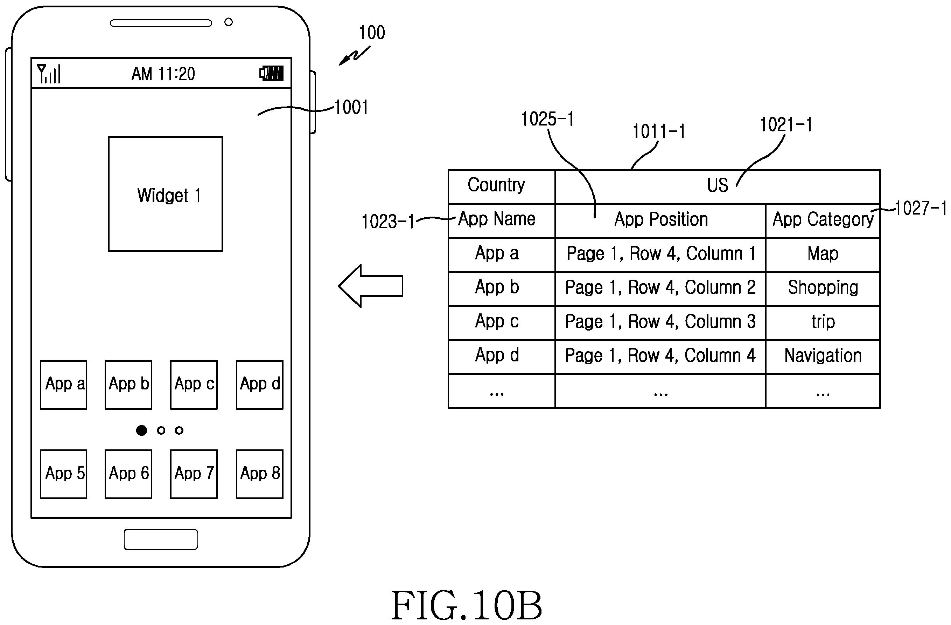

FIGS. 10A and 10B depict user interfaces for changing the screen composition when the electronic device moves according to an exemplary embodiment of the present invention.

FIG. 10A depicts a home screen 1001. For example, the home screen 1001 includes one widget and 8 application icons. Layout information 1011 of the home screen 1001 can be stored in the electronic device 100 or the server 164 in the matrix structure per tag.

For example, the layout information 1011 of the home screen 1001 is set to the tag of Korea 1021, and can include an application name 1023, an application icon position 1025, and application category information 1027 of the applications.

FIG. 10B depicts the home screen 1001 in the US. For example, the home screen 1001 includes one widget and 8 application icons. Layout information 1011-1 of the home screen 1001 can be stored in the electronic device 100 or the server 164 in the matrix structure per tag.

For example, the layout information 1011-1 of the home screen 1001 is set to the tag of the US 1021-1, and can include an application name 1023-1, an application icon position 1025-1, and application category information 1027-1 of the applications.

Based on the layout information 1011 of the first home screen corresponding to Korea, the second home screen corresponding to the US can include the recommended information provided from the server 164 to the electronic device 100.

Herein, when the applications to be arranged in the second home screen corresponding to the US are already installed to the corresponding electronic device, the electronic device can immediately configure and display the second home screen corresponding to the US without having to download the corresponding application from the application server which services in the USA.

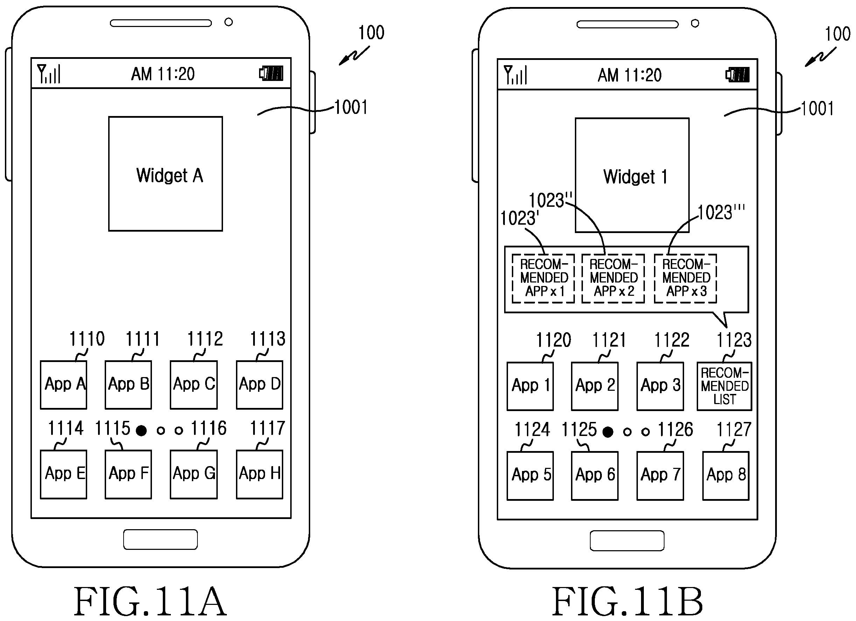

FIGS. 11A and 11B depict the screen composition change when the electronic device moves according to an exemplary embodiment of the present invention.

FIG. 11A depicts the home screen 1001 in Korea. For example, the home screen 1001 includes one widget A and 8 application icons App A 1101 through App H 1117. The layout information 1011 of the home screen 1001 can be stored in the electronic device 100 or the server 164 in the matrix structure per tag.

For example, the layout information 1011 of the home screen 1001 of FIG. 10A is set to the tag of Korea 1021, and can include the application name 1023, the application icon position 1025, and the application category information 1027 of the applications.

FIG. 11B depicts the home screen 1001 during the roaming in the US. For example, the home screen 1001 includes one widget 1 and 8 application icons App 1 1120 through App 8 1127. Layout information 1011-1 of the home screen 1001 can be stored in the electronic device 100 or the server 164 in the matrix structure per tag.

For example, the layout information 1011-1 of the home screen 1001 of FIG. 10B is set to the tag of the US 1021-1, and can include the application name 1023-1, the application icon position 1025-1, and the application category information 1027-1 of the applications.

For example, the widget 1 corresponding to the widget A used in Korea belongs to the category and the function similar to the widget A. The widget 1 can be pre-installed in the electronic device before the roaming.

Likewise, the application icons App 1 1120 through App 3 1122 and App 4 1124 through App 7 1127 corresponding to the application icons App A 1110 through App C 1112 and App E 1114 through App H 1117 used in Korea belong to the similar category and conduct the similar function. The application icons App 1 1220 through App 3 1122 and App 4 1124 through App 7 1127 can be pre-installed in the electronic device before the roaming.

However, when the application corresponding to the App D 1113 is not installed in the electronic device and the electronic device 100 roams in the US, the electronic device 100 can receive from the server 164 the recommended application (App x1 through App x3) information 1023 of the similar category and the similar function to the App D 1113. In so doing, the user can install the corresponding recommended application based on the recommended application information (e.g., application link information, name, etc.). Hence, the icon of the installed application can be arranged at the corresponding position 1123.

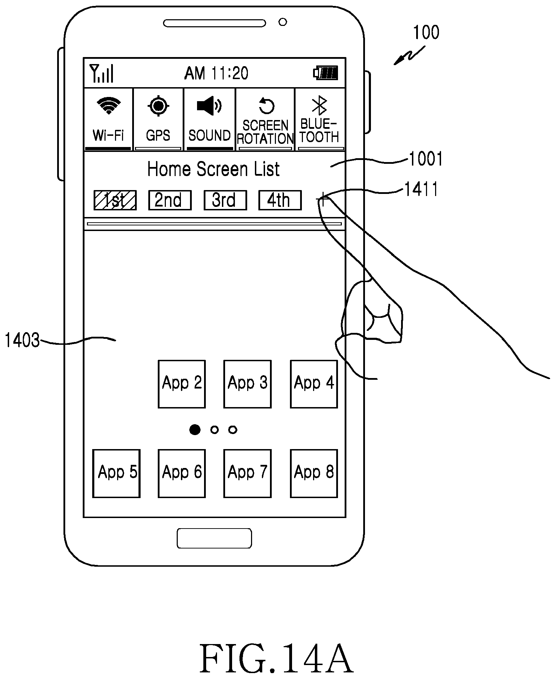

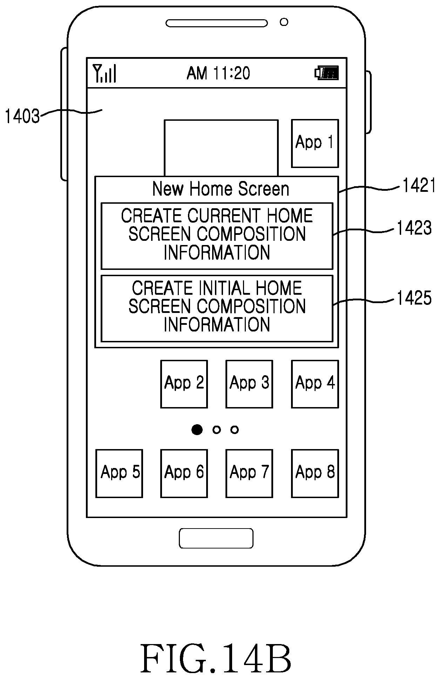

While a new home screen can be created when the country is changed as shown in FIGS. 10A and 10B, the home screen can be added by the user input as shown in FIGS. 14A and 14B.

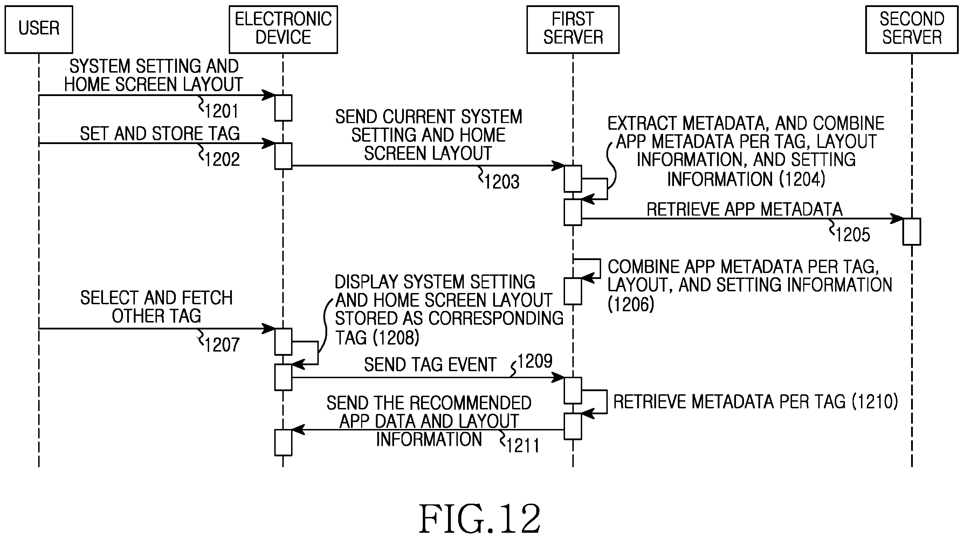

FIG. 12 is a flowchart of a method for controlling the screen composition according to an exemplary embodiment of the present invention.

Referring to FIG. 12, when the user generates the system setting or home screen layout change event in an idle state in step 1201, the electronic device can map the changed information to the active tag and automatically store in its memory. Alternatively, the user may designate and store the tag corresponding to the system setting or home screen layout change in step 1202.

In response to the change event, the electronic device can send the system setting and home screen layout change information based on the tag, to a first server in step 1203. The first server can reconstruct and store the system setting and home screen layout information based on the tag received from the electronic device, in the matrix structure per electronic device and per tag.

For example, when the tag 'default' is activated in the electronic device and the icon position of the application icon 'Naver Map' is changed from the first row and the third column in the second page of the home screen to the last row and the fourth column in the first page, the electronic device can store the position information of the icon changed in the background in its internal memory in a data structure mapped to the tag 'default', and automatically send the changed data to the first server. The first server can receive the tag 'default' and the changed data of the mapped data structure from the electronic device, store the tag 'default' and the mapped data structure of the electronic device, analyze the system setting information and the home screen layout information of the tag 'default', and normalize and store the data 'Korea', 'Naver Map', 'first page', and 'first row fourth column' in step 1204. The first server can extract the application information provided from 'Google Play' or 'Samsung Apps' via the second server in step 1205, and generate the recommended information per electronic device and per tag by mapping with the normalized data using an algorithm in step 1206.

When a particular tag of the electronic device is selected in step 1207, the electronic device can retrieve the information mapped to the corresponding tag in the memory, and apply and display the system setting and the home screen layout in step 1208. Concurrently, the electronic device can send the selected tag to the first server in step 1209. The first server can determine whether the selected tag of the electronic device includes the recommended information in step 1210, and transmit to the electronic device the name and the installation link of the recommended application together with the position information of the recommended application of the home screen in step 1211.

The user can install or delete the recommended application icon. When the system setting is changed, for example, when the country of the access communication network of the electronic device is changed, the electronic device can send the change to the first server. The first server can send to the electronic device the corresponding system change data and the mapped recommended information together with the recommended position in the home screen. For example, when the communication network country accessed by the electronic device is changed from 'Korea' to 'Germany', the electronic device can send the corresponding change to the first server. The first server can analyze metadata of the current applications installed in the electronic device, and send the recommended application list mapped to the country information 'Germany' to the electronic device.

When new tag addition is selected for the home screen of the electronic device, the electronic device may display a pop-up for inquiring about whether to store the current system setting and home screen layout as the new tag or whether to start with the default system setting and home screen layout. The electronic device can map the selected event to the new tag and store them in the memory. Concurrently, the electronic device can inquire the first server about the recommendation search and display the inquiry. For example, when the electronic device selects the new tag addition and creates the tag 'US' as default, the first server can vertically analyze the metadata stored in the electronic device and horizontally analyze metadata generated with the tag 'US' at the same time. That is, the first server can conclude that the tag 'US' indicates the country name, and retrieve the application information mapped to 'Korea' corresponding to the country among the metadata of the electronic device. The vertical analysis can determine whether information 'Wingspoon' mapped to 'Korea' is mapped to the category 'restaurant' and whether the tag home screen 'US' of the electronic device includes the application corresponding to the category 'restaurant'. The horizontal analysis can derive the application information corresponding to the category 'restaurant' mapped to 'US' from the normalized data collected by a metadata server according to the recommendation algorithm. The electronic device can receive and display the application information and the layout position information recommended by the vertical and horizontal analyses.

FIG. 13 is a flowchart of a method for changing the screen composition when the electronic device moves according to an exemplary embodiment of the present invention.

Referring to FIG. 13, the electronic device 100 determines a particular name (or tag information) for the current system setting or screen composition in step 1300. When the electronic device 100 is used in Korea, the particular name for the current system setting or screen composition can be defined as Korea.

Based on the determined name, the electronic device 100 can store/update the current system setting or screen composition information in step 1302. For example, the electronic device 100 can store the application icon moved or deleted or a new application icon created in the home screen.

In step 1304, the electronic device 100 can analyze and store the stored/updated first system setting or screen composition information. For example, the electronic device 100 can classify and store the position of the application icons installed and arranged in the home screen, and the category of the application.

When the current system setting or screen composition change event occurs in step 1306, that is, when the electronic device 100 roams in the other country, the electronic device 100 can provide the recommended information for the second system setting or screen composition to change based on the analysis of the first system setting or screen composition in step 1308. For example, when roaming from Korea to the US, the electronic device 100 can analyze the application information installed in Korea and thus display the recommended application information mapped to the country information 'US'.

In step 1310, the electronic device 100 can update the second system setting or screen composition using the recommended information. For example, the first system setting or screen composition information can be the current system setting or screen composition information of the electronic device 100, and the second system setting or screen composition information can be the system setting or screen composition information used in the other place or the other country.

The electronic device 100 can classify the applications arranged in the home screen used in Korea, based on the category. When roaming to Germany, the electronic device 100 can receive the application information from the application server serving in Germany, compare the application used in Korea with the application used in Germany, and recommend at least one application, which is similar to or related to the applications arranged in the home screen used in Korea, for Germany.

FIGS. 14A and 14B depict user interfaces for adding a new home screen according to an exemplary embodiment of the present invention.

FIG. 14A depicts an add button 1411 pressed in a home screen list 1401. A screen 1403 can arrange widgets or application icons corresponding to the first home screen.

In FIG. 14B, when the home screen add button 1411 is selected in FIG. 14A, a window 1421 can be displayed to ask about whether to create the added home screen layout using current home screen composition information 1423 or using initial home screen composition information 1425.

When a plurality of home screens exists, one of the home screen layouts may be determined as the added home screen layout.

When a number of applications are present, the screen can be divided based on the page. One of the pages can be set to the home screen. For example, when the home key is selected in any page, the electronic device can switch to the home screen.

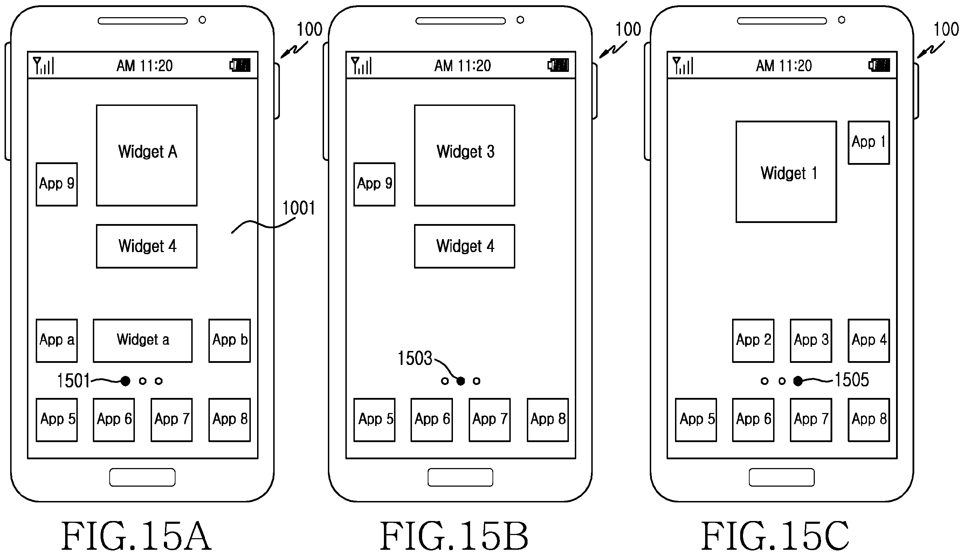

Even with the multiple home screens, the page corresponding to the home screen can be switched to the home screen corresponding to the particular time or place. Yet, multiple home screens may be mapped to the respective pages as shown in FIGS. 15A, 15B, and 15C.

FIGS. 15A, 15B, and 15C depict home screens corresponding to countries according to an exemplary embodiment of the present invention.

In FIG. 15A, a first home screen corresponding to a first country can be placed in a first page 1501.

In FIG. 15B, a second home screen corresponding to a second country can be placed in a second page 1503.

In FIG. 15C, a third home screen corresponding to a third country can be placed in a third page 1505.

For example, when the electronic device 100 is in the first country, the first home screen can be set. The electronic device 100 can switch to the second home screen, that is, a second page 1503 in the second country. The electronic device 100 can switch to the third home screen, that is, a third page 1505 in the third country.

When there is no home screen corresponding to the country, the home screen corresponding to the country can be created based on the home screen layout information of the other country. That is, the page corresponding to the country can be additionally created.

The methods as described in the claims and/or the specification of exemplary embodiments of the present invention can be implemented using hardware, software, or a combination of them.

As for the software, a computer-readable storage medium including one or more programs (software modules) may be provided. One or more programs stored in the computer-readable storage medium may be configured for execution by one or more processors of an electronic device. One or more programs include instructions for controlling the electronic device to execute the methods according to the exemplary embodiments as described in the claims and/or the specification of the present invention.

Such a program (software module, software) may be stored to a random access memory, a non-volatile memory including a flash memory, a Read Only Memory (ROM), an Electrically Erasable Programmable ROM (EEPROM), a magnetic disc storage device, a Compact Disc (CD)-ROM, Digital Versatile Discs (DVDs) or other optical storage devices, and a magnetic cassette. Alternatively, the programs may be stored to a memory combining part or all of those recording media. A plurality of memories may be equipped.

The programs may be stored in an attachable storage device accessible via a communication network such as Internet, Intranet, Local Area Network (LAN), Wide LAN (WLAN), or Storage Area Network (SAN), or a communication network by combining these networks. The storage device can access the present electronic device through an external port.

A separate storage device may access the present electronic device over a communication network.

Accordingly, exemplary embodiments may provide a program comprising code for implementing apparatus or a method as claimed in any one of the claims of this specification and a machine-readable storage storing such a program. Still further, such programs may be conveyed electronically via any medium, for example a communication signal carried over a wired or wireless connection and embodiments suitably encompass the same

As set forth above, the home screen and the system setting are stored and managed per tag. Unlike the conventional single home screen, the multiple home screens can be moved using one button click. Therefore, the user convenience can be maximized. In addition, more accurate and active recommended information can be provided to the user by vertically and horizontally analyzing the tag meaning and the mapped application information.

Throughout the description of this specification, the singular encompasses the plural unless the context otherwise requires. In particular, where the indefinite article is used, the specification is to be understood as contemplating plurality as well as singularity, unless the context requires otherwise.

Features, integers or characteristics described in conjunction with a particular aspect, embodiment or example of the invention are to be understood to be applicable to any other aspect, embodiment or example described herein unless incompatible therewith.

It will also be appreciated that, throughout the description of this specification, language in the general form of "X for Y" (where Y is some action, activity or step and X is some means for carrying out that action, activity or step) encompasses means X adapted or arranged specifically, but not exclusively, to do Y.

## Claims

1. A method, performed by an electronic device (100), for controlling a composition of a layout of the electronic device (100), the method comprising:
displaying, via a display (150) of the electronic device, a first layout in which a first application icon is arranged;
storing (1202), in a memory (130) of the electronic device, first layout information for the first layout along with a first communication-network country accessed by the electronic device (100), wherein the first layout information comprises a display position and an application category for the first application icon;
transmitting (1203), to an external server (164), the first layout information;
in response to detecting that the country of the communication network accessed by the electronic device is changed from the first communication-network country to a second communication-network country, transmitting (1209), to the external server (164), information for the second communication network country;
receiving (1211), from the external server (164), second layout information determined based on the first layout information, the second layout information comprising a display position and an application category for a second application icon corresponding to a second application; and
displaying, via the display (150), a second layout in which the second application icon is arranged according to the second layout information,
wherein the second application is different from the first application, and
wherein the display position and the application category of the second application icon are the same as the display position and the application category of the first application icon.

2. The method of claim 1, further comprising:
displaying, via the display (150), an icon representing a download link used to download the second application based on the second layout information when the application is not installed in the electronic device (100); and
in response to a selection of the icon, downloading the second application via the download link, and installing the second application in the electronic device (100) and thereby generating the second application icon at the display position of the first application icon.

3. The method of claim 1, further comprising:
displaying, via the display (150), one or more recommended application icons based on the second layout information; and
detecting the selection of the second application icon among the one or more recommended application icons.

4. The method of claim 1, further comprising:
storing, in the memory (150), the second layout information along with the second communication-network country.

5. The method of claim 1, wherein the second application icon is displayed at a same page, row, and column of the display position of the first application.

6. An electronic device (100), comprising:
a display (150);
a memory (130); and
a processor (120) configured to:
control the display (150) to display a first layout in which a first application icon is arranged;
store, in the memory (130), first layout information for the first layout along with a first communication-network country accessed by the electronic device (100), wherein the first layout information comprises a display position and an application category for the first application icon;
transmit, to an external server (164), the first layout information;
in response to detecting that the country of the communication network accessed by the electronic device is changed from the first communication-network country to a second communication-network country, transmit, to the external server (164), information for the second communication-network country;
receive, from the external server (164), second layout information determined based on the first layout information, the second layout information comprising a display position and an application category for a second application icon corresponding to a second application; and
control the display (150) to display a second layout in which the second application icon is arranged according to the second layout information,
wherein the second application is different from the first application, and
wherein the display position and the application category of the second application icon are the same as the display position and the application category of the first application icon.

7. The electronic device (100) of claim 6, wherein the processor (120) is further configured to:
control the display (150) to display an icon representing a download link used to download the second application based on the second layout information when the application is not installed in the electronic device (100); and
in response to a selection of the icon, download the second application via the download link, and install the second application in the electronic device (100) and thereby generating the second application icon at the display position of the first application icon.

8. The electronic device (100) of claim 6, wherein the processor (120) is further configured to:
control the display (150) to display one or more recommended application icons based on the second layout information; and
detect the selection of the second application icon among the one or more recommended application icons.

9. The electronic device (100) of claim 6, wherein the processor (120) is further configured to store, in the memory (150), the second layout information along with the second communication-network country.

10. The electronic device of claim 6, wherein the second application icon is displayed at a same page, row, and column of the display position of the first application.

## Patentansprüche

1. Ein Verfahren zur Steuerung einer Zusammensetzung eines Layouts einer elektronischen Vorrichtung (100), wobei das Verfahren durch die elektronische Vorrichtung (100) durchgeführt wird und Folgendes umfasst:
Anzeigen eines ersten Layouts, in dem ein erstes Anwendungssymbol angeordnet ist, über eine Anzeige (150) der elektronischen Vorrichtung;
Speichern (1202) von ersten Layoutinformationen für das erste Layout samt einem ersten Land eines Kommunikationsnetzwerks, auf das die elektronische Vorrichtung (100) zugegriffen hat, wobei dies in einem Arbeitsspeicher (130) der elektronischen Vorrichtung erfolgt, wobei die ersten Layoutinformationen eine Anzeigeposition und eine Anwendungskategorie für das erste Anwendungssymbol umfassen;
Übertragen (1203) der ersten Layoutinformationen an einen externen Server (164);
Übertragen (1209) von Informationen für ein zweites Land eines Kommunikationsnetzwerks an den externen Server (164) infolge der Erkennung, dass sich das Land des Kommunikationsnetzwerks, auf das die elektronische Vorrichtung zugegriffen hat, von dem ersten Land des Kommunikationsnetzwerks in ein zweites Land des Kommunikationsnetzwerks geändert hat;
Empfangen (1211) von zweiten Layoutinformationen von dem externen Server (164), die basierend auf den ersten Layoutinformationen ermittelt werden, wobei die zweiten Layoutinformationen eine Anzeigeposition und eine Anwendungskategorie für ein zweites Anwendungssymbol entsprechend einer zweiten Anwendung umfassen; und
Anzeigen eines zweiten Layouts, in dem das zweite Anwendungssymbol entsprechend den zweiten Layoutinformationen angeordnet ist, über die Anzeige (150),
wobei sich die zweite Anwendung von der ersten Anwendung unterscheidet, und
wobei die Anzeigeposition und die Anwendungskategorie des zweiten Anwendungssymbols der Anzeigeposition und der Anwendungskategorie des ersten Anwendungssymbols entsprechen.

2. Das Verfahren nach Anspruch 1, wobei dieses weiter Folgendes umfasst:
Anzeigen eines Symbols über die Anzeige (150), wobei das Symbol einen Downloadlink darstellt, anhand dessen die zweite Anwendung basierend auf den zweiten Layoutinformationen heruntergeladen wird, wenn die Anwendung nicht in der elektronischen Vorrichtung (100) installiert ist; und
Herunterladen der zweiten Anwendung über den Downloadlink infolge einer Auswahl des Symbols und Installieren der zweiten Anwendung in der elektronischen Vorrichtung (100), wodurch das zweite Anwendungssymbol an der Anzeigeposition des ersten Anwendungssymbols generiert wird.

3. Das Verfahren nach Anspruch 1, wobei dieses weiter Folgendes umfasst:
Anzeigen von mindestens einem empfohlenen Anwendungssymbol basierend auf den zweiten Layoutinformationen über die Anzeige (150); und
Erkennen der Auswahl des zweiten Anwendungssymbols unter dem einen oder den mehreren empfohlenen Anwendungssymbolen.

4. Das Verfahren nach Anspruch 1, wobei dieses weiter Folgendes umfasst:
Speichern der zweiten Layoutinformationen samt dem zweiten Land des Kommunikationsnetzwerks im Speicher (150).

5. Das Verfahren nach Anspruch 1, wobei das zweite Anwendungssymbol auf einer selben Seite, Zeile und Spalte der Anzeigeposition der ersten Anwendung angezeigt wird.

6. Eine elektronische Vorrichtung (100), die Folgendes umfasst:
eine Anzeige (150);
einen Arbeitsspeicher (130); und
einen Prozessor (120), der für folgende Zwecke eingerichtet ist:
Steuern der Anzeige (150), damit diese ein erstes Layout anzeigt, in dem ein erstes Anwendungssymbol angeordnet ist;
Speichern von ersten Layoutinformationen für das erste Layout samt einem ersten Land eines Kommunikationsnetzwerks, auf das die elektronische Vorrichtung (100) zugegriffen hat, in einem Arbeitsspeicher (130), wobei die ersten Layoutinformationen eine Anzeigeposition und eine Anwendungskategorie für das erste Anwendungssymbol umfassen;
Übertragen der ersten Layoutinformationen an einen externen Server (164);
Übertragen von Informationen für das zweite Land des Kommunikationsnetzwerks an den externen Server (164) infolge der Erkennung, dass sich das Land des Kommunikationsnetzwerks, auf das die elektronische Vorrichtung zugegriffen hat, von dem ersten Land des Kommunikationsnetzwerks in ein zweites Land des Kommunikationsnetzwerks geändert hat;
Empfangen von zweiten Layoutinformationen von dem externen Server (164), die basierend auf den ersten Layoutinformationen ermittelt werden, wobei die zweiten Layoutinformationen eine Anzeigeposition und eine Anwendungskategorie für ein zweites Anwendungssymbol entsprechend einer zweiten Anwendung umfassen; und
Steuern der Anzeige (150), damit diese ein zweites Layout anzeigt, in dem das zweite Anwendungssymbol entsprechend den zweiten Layoutinformationen angeordnet ist,
wobei sich die zweite Anwendung von der ersten Anwendung unterscheidet, und
wobei die Anzeigeposition und die Anwendungskategorie des zweiten Anwendungssymbols der Anzeigeposition und der Anwendungskategorie des ersten Anwendungssymbols entsprechen.

7. Die elektronische Vorrichtung (100) nach Anspruch 6, wobei der Prozessor (120) ferner für folgende Zwecke eingerichtet ist:
Steuern der Anzeige (150), damit diese ein Symbol anzeigt, das einen Downloadlink darstellt, anhand dessen die zweite Anwendung basierend auf den zweiten Layoutinformationen heruntergeladen wird, wenn die Anwendung nicht in der elektronischen Vorrichtung (100) installiert ist; und
Herunterladen der zweiten Anwendung über den Downloadlink infolge einer Auswahl des Symbols und Installieren der zweiten Anwendung in der elektronischen Vorrichtung (100), wodurch das zweite Anwendungssymbol an der Anzeigeposition des ersten Anwendungssymbols generiert wird.

8. Die elektronische Vorrichtung (100) nach Anspruch 6, wobei der Prozessor (120) ferner für folgende Zwecke eingerichtet ist:
Steuern der Anzeige (150), damit diese basierend auf den zweiten Layoutinformationen mindestens ein empfohlenes Anwendungssymbol anzeigt; und
Erkennen der Auswahl des zweiten Anwendungssymbols unter dem einen oder den mehreren empfohlenen Anwendungssymbolen.

9. Die elektronische Vorrichtung (100) nach Anspruch 6, wobei der Prozessor (120) ferner eingerichtet ist, um die zweiten Layoutinformationen samt dem zweiten Land des Kommunikationsnetzwerks in dem Arbeitsspeicher (150) zu speichern.

10. Die elektronische Vorrichtung nach Anspruch 6, wobei das zweite Anwendungssymbol auf einer selben Seite, Zeile und Spalte der Anzeigeposition der ersten Anwendung angezeigt wird.

## Revendications

1. Un procédé, exécuté par un dispositif électronique (100), de commande d'une composition d'une disposition du dispositif électronique (100), le procédé comprenant :
l'affichage, par l'intermédiaire d'un dispositif d'affichage (150) du dispositif électronique, d'une première disposition dans laquelle une première icône d'application est agencée,
la conservation en mémoire (1202), dans une mémoire (130) du dispositif électronique, de premières informations de disposition destinées à la première disposition conjointement avec un premier pays de réseau de communication accédé par le dispositif électronique (100), où les premières informations de disposition comprennent une position d'affichage et une catégorie d'application pour la première icône d'application,
la transmission (1203), à un serveur externe (164), des premières informations de disposition,
en réponse à la détection que le pays du réseau de communication accédé par le dispositif électronique est modifié du premier pays de réseau de communication vers un deuxième pays de réseau de communication, la transmission (1209), au serveur externe (164), d'informations relatives au deuxième pays de réseau de communication,
la réception (1211), à partir du serveur externe (164), de deuxièmes informations de disposition déterminées en fonction des premières informations de disposition, les deuxièmes informations de disposition comprenant une position d'affichage et une catégorie d'application pour une deuxième icône d'application correspondant à une deuxième application, et
l'affichage, par l'intermédiaire du dispositif d'affichage (150), d'une deuxième disposition dans laquelle la deuxième icône d'application est agencée en fonction des deuxièmes informations de disposition,
où la deuxième application est différente de la première application, et
où la position d'affichage et la catégorie d'application de la deuxième icône d'application sont les mêmes que la position d'affichage et la catégorie d'application de la première icône d'application.

2. Le procédé selon la Revendication 1, comprenant en outre :
l'affichage, par l'intermédiaire du dispositif d'affichage (150), d'une icône représentant un lien de téléchargement utilisé pour télécharger la deuxième application en fonction des deuxièmes informations de disposition lorsque l'application n'est pas installée dans le dispositif électronique (100), et
en réponse à une sélection de l'icône, le téléchargement de la deuxième application par l'intermédiaire du lien de téléchargement, et l'installation de la deuxième application dans le dispositif électronique (100), et ainsi la génération de la deuxième icône d'application au niveau de la position d'affichage de la première icône d'application.

3. Le procédé selon la Revendication 1, comprenant en outre :
l'affichage, par l'intermédiaire du dispositif d'affichage (150), d'une ou de plusieurs icônes d'application recommandées en fonction des deuxièmes informations de disposition, et
la détection de la sélection de la deuxième icône d'application parmi les une ou plusieurs icônes d'application recommandées.

4. Le procédé selon la Revendication 1, comprenant en outre :
la conservation en mémoire, dans la mémoire (150), des deuxièmes informations de disposition conjointement avec le deuxième pays de réseau de communication.

5. Le procédé selon la Revendication 1, où la deuxième icône d'application est affichée au niveau d'une même page, d'une même rangée et d'une même colonne de la position d'affichage de la première application.

6. Un dispositif électronique (100), comprenant :
un dispositif d'affichage (150),
une mémoire (130), et
un processeur (120) configuré de façon à :
commander le dispositif d'affichage (150) de façon à afficher une première disposition dans laquelle une première icône d'application est agencée,
conserver en mémoire, dans la mémoire (130), des premières informations de disposition pour la première disposition conjointement avec un premier pays de réseau de communication accédée par le dispositif électronique (100), où les premières informations de disposition comprennent une position d'affichage et une catégorie d'application pour la première icône d'application,
transmettre, à un serveur externe (164), les premières informations de disposition,
en réponse à la détection que le pays du réseau de communication accédée par le dispositif électronique est modifié du premier pays de réseau de communication vers un deuxième pays de réseau de communication, transmettre, au serveur externe (164), des informations relatives au deuxième pays de réseau de communication,
recevoir, à partir du serveur externe (164), des deuxièmes informations de disposition déterminées en fonction des premières informations de disposition, les deuxièmes informations de disposition comprenant une position d'affichage et une catégorie d'application pour une deuxième icône d'application correspondant à une deuxième application, et
commander le dispositif d'affichage (150) de façon à afficher une deuxième disposition dans laquelle la deuxième icône d'application est agencée en fonction des deuxièmes informations de disposition,
où la deuxième application est différente de la première application, et
où la position d'affichage et la catégorie d'application de la deuxième icône d'application sont les mêmes que la position d'affichage et la catégorie d'application de la première icône d'application.

7. Le dispositif électronique (100) selon la Revendication 6, où le processeur (120) est configuré en outre de façon à :
commander le dispositif d'affichage (150) de façon à afficher une icône représentant un lien de téléchargement utilisé pour télécharger la deuxième application en fonction des deuxièmes informations de disposition lorsque l'application n'est pas installée dans le dispositif électronique (100), et
en réponse à une sélection de l'icône, télécharger la deuxième application par l'intermédiaire du lien de téléchargement et installer la deuxième application dans le dispositif électronique (100), et ainsi générer la deuxième icône d'application au niveau de la position d'affichage de la première icône d'application.

8. Le dispositif électronique (100) selon la Revendication 6, où le processeur (120) est configuré en outre de façon à :
commander le dispositif d'affichage (150) de façon à afficher une ou plusieurs icônes d'application recommandées en fonction des deuxièmes informations de disposition, et
détecter la sélection de la deuxième icône d'application parmi les une ou plusieurs icônes d'application recommandées.

9. Le dispositif électronique (100) selon la Revendication 6, où le processeur (120) est configuré en outre de façon à conserver en mémoire, dans la mémoire (150), les deuxièmes informations de disposition conjointement avec le deuxième pays de réseau de communication.

10. Le dispositif électronique selon la Revendication 6, où la deuxième icône d'application est affichée au niveau d'une même page, d'une même rangée et d'une même colonne de la position d'affichage de la première application.
